# EUROPÄISCHE PATENTANMELDUNG

(11) **EP 4 744 919 A1**
(43) Veröffentlichungstag der Anmeldung: **20.05.2026**
(21) Anmeldenummer: 24212927.8
(22) Anmeldetag: 14.11.2024
(51) Int. Cl.: B60J 5/06, B62D 33/02

(54) **MITTELRUNGE UND PLANENAUFBAU EINES NUTZFAHRZEUGS**

(71) Anmelder: Schmitz Cargobull AG, 48341 Altenberge (DE)
(72) Erfinder: HORNIG, Stefan, 48565 Steinfurt (DE); KRÜGER, Mirko, 48282 Emsdetten (DE)
(74) Vertreter: Cohausz & Florack

(57) **Zusammenfassung**

Beschrieben und dargestellt ist eine Mittelrunge (11) für einen Planenaufbau (1) eines Nutzfahrzeugs (N), insbesondere Lastkraftwagen, Anhänger oder Sattelauflieger, mit einem Rungenkörper (17), einem teilweise in dem Rungenkörper (17) aufgenommenen Rungenschiebling (16), einem ein weiteres Einschieben des Rungenschieblings (16) in den Rungenkörper (17) begrenzenden Höhenabstecker (21) und einer Mehrzahl von Absteckaufnahmen (23) zum Arretieren des Höhenabsteckers (21) in unterschiedlichen Höhenpositionen, wobei der Höhenabstecker (21) wenigstens ein Arretierungselement (22) zum formschlüssigen Eingreifen in die Absteckaufnahmen (23) in unterschiedlichen Höhenpositionen aufweist. Damit eine einfachere Fertigung und/oder Handhabung erreicht werden kann, ist vorgesehen, dass der Höhenabstecker (21) wenigstens einen in eine Führung (27) des Rungenkörpers (17) eingreifenden Schwenkbolzen (25) aufweist, dass der wenigstens eine Schwenkbolzen (25) zum Verstellen des Höhenabsteckers (21) zwischen den unterschiedlichen Höhenpositionen in der wenigstens einen Führung (27) geführt ist und dass der Höhenabstecker (21) von einer das Verstellen des Höhenabsteckers (21) zwischen unterschiedlichen Höhenpositionen freigebenden Freigabestellung in eine den Höhenabstecker (21) gegenüber einem Verstellen nach unten formschlüssig arretierenden Arretierungsstellung und zurück um den wenigstens einen Schwenkbolzen (25) schwenkbar in der Führung (27) des Rungenkörpers (17) gehalten ist.

## Beschreibung

Die Erfindung betrifft eine Mittelrunge für einen Planenaufbau eines Nutzfahrzeugs, insbesondere Lastkraftwagen, Anhänger oder Sattelauflieger, mit einem Rungenkörper, einem teilweise in dem Rungenkörper aufgenommenen Rungenschiebling, einem ein weiteres Einschieben des Rungenschieblings in den Rungenkörper begrenzenden Höhenabstecker und einer Mehrzahl von Absteckaufnahmen zum Arretieren des Höhenabsteckers in unterschiedlichen Höhenpositionen, wobei der Höhenabstecker wenigstens ein Arretierungselement zum formschlüssigen Eingreifen in die Absteckaufnahmen in unterschiedlichen Höhenpositionen aufweist. Ferner betrifft die Erfindung einen Planenaufbau für ein Nutzfahrzeug, insbesondere Lastkraftwagen, Anhänger oder Sattelauflieger, mit einem Dach, einem Ladeboden und wenigstens einer Mittelrunge der genannten Art, wobei die wenigstens eine Mittelrunge das Dach am Ladeboden abstützt.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn Seitenplanen an den Seitenwänden vorgesehen sind, die entlang der Seitenwände verschoben werden können, spricht man auch von sogenannten Curtainsidern. Unabhängig von der Art der Planenaufbauten weisen diese meist über die Länge der Seitenwände verteilt angeordnete Mittelrungen und Eckrungen an den Enden der Seitenwände auf, wobei die Mittelrungen und Eckrungen das Dach gegenüber dem Ladeboden abstützen. Die Mittelrungen können dabei zum Be- und Entladen des Laderaums in vielen Fällen entfernt oder zur Seite verschoben werden. Die Mittelrungen und Eckrungen können zudem über Aufsatzlatten miteinander verbunden werden, welche die Seitenwände aussteifen. Die Aufsatzlatten werden dabei in Aufsatzlattenhalterungen der Mittelrungen und Eckrungen eingeschoben.

Planenaufbauten weisen typischerweise zu beiden Längsseiten des Dachs sogenannte Dachholme auf, die über die Mittelrungen gegenüber seitlich am Ladeboden vorgesehenen Bodenträgern abgestützt sind. Dabei können die Mittelrungen von einer Fahrstellung, in welcher die Mittelrunge den zugehörigen Dachholm am zugehörigen Bodenträger abstützt, in eine Ladestellung verstellt werden, in welcher die Mittelrunge am zugehörigen Dachholm gehalten und entlang des Dachholms zur Seite verstellt werden kann, um die Seitenwand des Nutzfahrzeugs zum Zwecke des Be- und Entladens freizugeben. In der Ladestellung sind die Mittelrungen von den zugehörigen Bodenträgern getrennt.

Unabhängig von einem Trennen der Mittelrungen vom Ladeboden, können die Mittelrungen höhenverstellbar ausgebildet sein, um eine Höhenverstellung des Dachs zu erlauben. Die Höhenverstellung des Dachs dient dabei vorzugsweise dazu, das Dach in unterschiedlichen Fahrhöhen einzustellen, in denen das Dach dann sicher fixiert und von den Mittelrungen gegenüber dem Ladeboden abgestützt ist. Zur Höhenverstellung des Dachs wird dieses zunächst über die Eckrungen an den Ecken des Planenaufbaus angehoben. Dabei werden in mit dem Ladeboden verbundene Rungenkörper eingreifende Rungenschieblinge mit dem Dach angehoben und ein entsprechendes Stück weit aus dem Rungenkörper herausgezogen. Die Rungenschieblinge sitzen mithin nicht mehr auf den Höhenabsteckungen der Mittelrungen auf, welche die untere Stellung des Dachs vorgeben. Die Höhenabsteckungen sind mithin entlastet, da sie das Dach in der angehobenen Stellung nicht mehr tragen. Nun können Höhenabstecker der Höhenabsteckungen entlang der Mittelrunge nach oben oder nach unten verstellt werden. Dazu werden Arretierungselemente der Höhenabstecker aus Absteckaufnahmen entnommen und die Arretierungselemente erneut auf einer anderen Höhenposition in andere Absteckaufnahmen eingesteckt. Die Höhenabstecker sind somit wieder formschlüssig an anderer Stelle des Rungenkörpers fixiert. Anschließend wird das Dach über die Eckrungen wieder abgelassen, bis die Rungenschieblinge wieder in anderer Höhe auf den Höhenabsteckungen, insbesondere den Höhenabsteckern aufsitzen. Das Dach ist nun in einer anderen Fahrhöhe eingestellt und das Nutzfahrzeug kann mit dem Dach in dieser anderen Höhe sicher verfahren werden.

Grundsätzlich sind unterschiedliche Systeme zur Höhenverstellung der Mittelrungen am Markt verfügbar. Diese sind jedoch entweder apparativ oder hinsichtlich ihrer Handhabung verhältnismäßig aufwendig.

Daher liegt der vorliegenden Erfindung die Aufgabe zugrunde, die Mittelrunge und den Plananaufbau jeweils der eingangs genannten und zuvor näher erläuterten Art derart auszugestalten und weiterzubilden, dass eine einfachere Fertigung und/oder Handhabung erreicht werden kann.

Diese Aufgabe ist bei einer Mittelrunge nach dem Oberbegriff von Anspruch 1 dadurch gelöst, dass der Höhenabstecker wenigstens einen in eine Führung des Rungenkörpers eingreifenden Schwenkbolzen aufweist, dass der wenigstens eine Schwenkbolzen zum Verstellen des Höhenabsteckes zwischen den unterschiedlichen Höhenpositionen in der wenigsten einen Führung geführt ist und dass der Höhenabstecker von einer das Verstellen des Höhenabsteckers zwischen unterschiedlichen Höhenpositionen freigebenden Freigabestellung in eine den Höhenabstecker gegenüber einem Verstellen nach unten formschlüssig arretierenden Arretierungsstellung und zurück um den wenigstens einen Schwenkbolzen schwenkbar in der Führung des Rungenkörpers gehalten ist.

Die genannte Aufgabe ist ferner bei einem Planenaufbau nach dem Oberbegriff des Anspruchs 15 dadurch gelöst, dass die wenigstens eine Mittelrunge nach einem der Ansprüche 1 bis 14 ausgebildet ist.

Der Höhenabstecker kann entlang einer Führung des Rungenkörpers in der Höhenrichtung verschoben werden, wobei der Höhenbastecker mit wenigstens einem Schwenkbolzen in die Führung eingreift. Der Schwenkbolzen und die Führung sind dabei so aufeinander abgestimmt, dass der Schwenkbolzen in der Führung hin und her verschoben werden kann. Auf diese Weise kann der Höhenabstecker unterschiedliche Höhenpositionen entlang des Rungenkörpers erreichen. Zudem kann der Höhenabstecker um den wenigstens einen Schwenkbolzen in der Führung und damit gegenüber dem Rungenkörper geschwenkt werden. Durch ein entsprechendes Schwenken des Höhenabsteckers kann dieser aus einer Arretierungsstellung in eine Freigabestellung und zurück verstellt werden.

In der Arretierungsstellung greift das wenigstens eine Arretierungselement des Höhenabsteckers formschlüssig in wenigstens eine Absteckaufnahme des Rungenkörpers ein. Der Formschluss wirkt dabei einem versehentlichen Verstellen des Höhenabsteckers entlang des Rungenkörpers nach unten entgegen. Damit ist die untere Stellung des Dachs festgelegt, da der mit dem Dach verbundene Rungenschiebling von dem Höhenabstecker in dieser Position nach unten abgestützt wird. In der Freigabestellung ist das wenigstens eine Arretierungselement dagegen außer Eingriff mit der Absteckaufnahme. Folglich ist der Höhenabstecker in dieser Stellung zum Verstellen nach oben oder unten entlang der Führung des Rungenkörpers freigegeben. Der Höhenabstecker kann dabei beliebig oft zwischen der Arretierungsstellung und der Freigabestellung hin und her geschwenkt werden. Der Höhenabstecker kann in der Arretierungsstellung auch gegenüber einem Verstellen nach oben formschlüssig gehalten sein. Zwingend ist dies aber nicht.

Durch die entsprechende Ausgestaltung der Mittelrunge kann ein sehr kleiner und leicht zu handhabender Höhenabstecker verwendet werden. Die geringe Größe geht dabei insbesondere mit einem geringen Gewicht einher, was die Handhabung weiter vereinfacht. Zudem kann der Höhenabstecker aber auch entsprechend kompakt ausgebildet werden, was die Handhabung des Höhenabsteckers ebenfalls vereinfacht. Nicht zuletzt kann die entsprechende Höhenabsteckung mit dem Höhenabstecker und den zugehörigen Absteckaufnahmen in einer einfachen und schnellen Weise gefertigt werden, wodurch entsprechende Aufwände eingespart werden können, um eine kostengünstige Fertigung der Mittelrunge zu gewährleisten.

Bei einer ersten besonders bevorzugten Ausgestaltung der Mittelrunge ist der Höhenabstecker unverlierbar in der Führung des Rungenkörpers gehalten. Selbst wenn der Höhenabstecker in die Freigabestellung verstellt wird, kann der Höhenabstecker mithin nicht ohne Weiteres vom Rungenkörper entfernt werden. Ein versehentliches Verlieren des Höhenabsteckers wird mithin vermieden, so dass das Dach stets zuverlässig und sicher in seiner Höhe eingestellt werden kann.

Der Abstand zwischen dem wenigstens einen Arretierungselement des Höhenabsteckers und dem wenigstens einen Schwenkbolzen kann geringer sein, als es der Abstand zwischen acht oder beispielsweise sechs aufeinanderfolgenden Absteckaufnahmen ist. Dann kann ein kompakter und leichter Höhenabstecker verwendet werden. Dieser ist aufgrund seiner Abmessungen und seines Gewichts besonders einfach zu handhaben. Zudem ist der Höhenabstecker aber auch verlässlich genug zu verwenden und erlaubt überdies eine Verstellung in sehr kleinen Schrittweiten. Die vorgenannten Vorteile werden in noch höherem Maße erreicht, wenn der Abstand zwischen dem wenigstens einen Arretierungselement des Höhenabsteckers und dem wenigstens einen Schwenkbolzen geringer ist als der Abstand zwischen vier oder gar nur zwei aufeinanderfolgenden Absteckaufnahmen. Es hat sich dabei in einigen Fällen als besonders vorteilhaft erwiesen, wenn der Abstand zwischen dem Arretierungselement und dem Schwenkbolzen allenfalls geringfügig größer ist als der Abstand von zwei aufeinanderfolgenden Absteckaufnahmen. Dabei kann es sich bei den genannten Abständen der Absteckaufnahmen um tatsächliche Abstände handeln, insbesondere bei wenigstens im Wesentlichen gleichartigen Abständen benachbarter Absteckaufnahmen. Andernfalls kann es sich bei den genannten Abständen der Absteckaufnahmen um mittlere Abstände der entsprechenden Mittelrunge handeln.

Alternativ oder zusätzlich kann die Höhenerstreckung des Höhenabsteckers in der Arretierungsstellung kürzer sein als der Abstand von zehn aufeinanderfolgenden Absteckaufnahmen. Auch dadurch lässt sich das Gewicht des Höhenabsteckers verringern sowie dessen Handhabbarkeit verbessern. Gleichzeitig ist es dann möglich, den Höhenabstecker in geringen Schrittweiten sicher und zuverlässig zu verstellen. Dies ist letztlich in besonderem Maße der Fall, wenn die Höhenerstreckung des Höhenabsteckers in der Arretierungsstellung kürzer ist als der Abstand von fünf oder sogar nur von drei aufeinanderfolgenden Absteckaufnahmen. Es hat sich dabei in einigen Fällen als besonders vorteilhaft erwiesen, wenn die Höhenerstreckung des Höhenabsteckers geringer ist als der Abstand von zwei aufeinanderfolgenden Absteckaufnahmen.

Zum Zwecke einer sehr präzisen Verstellung des Höhenabsteckers in sehr kleinen Schrittweiten bietet es sich im Übrigen an, wenn der mittlere Abstand von zwei aufeinanderfolgenden Absteckaufnahmen weniger als 100 mm beträgt. Noch deutlich mehr Einstellungsmöglichkeiten können bereitgestellt werden, wenn der mittlere Abstand von zwei aufeinanderfolgenden Absteckaufnahmen weniger als 80 mm oder sogar weniger als 60 mm beträgt. Es hat sich dabei in einigen Fällen als besonders vorteilhaft erwiesen, wenn der mittlere Abstand von zwei aufeinanderfolgenden Absteckaufnahmen ungefähr 50 mm beträgt.

Das Verstellen des Höhenabsteckers kann in einfacher und zugleich sehr zuverlässiger Weise erfolgen, wenn der Höhenabstecker von der Arretierungsstellung in die Freigabestellung um einen großen Winkelbereich gegenüber dem Rungenkörper geschwenkt werden kann. Dieser Winkelbereich kann dabei vorzugsweise wenigstens 50° betragen. Eine kompakte Ausgestaltung des Höhenabsteckers kann zudem ein Schwenken des Höhenabsteckers von der Arretierungsstellung in die Freigabestellung um wenigstens 70° oder gar um wenigstens 90° gegenüber dem Rungenkörper erlauben. Dies bedeutet nicht zwingend, dass das Arretierungselement erst nach einem Schwenken des Höhenabsteckers um einen entsprechenden Winkelbereich außer Eingriff mit der Absteckaufnahme gelangt. Dies kann schon durch ein Schwenken des Höhenabsteckers um einen deutlich geringeren Winkelbereich gegenüber dem Rungenkörper der Fall sein. Bei einem weiten Schwenken eines recht kurzen Höhenabsteckers kann dieser sehr einfach und zuverlässig vom Bediener entlang der Führung des Rungenkörpers nach oben oder nach unten verschoben werden.

Um ein zuverlässiges Höhenverstellen des Dachs zu ermöglichen, sollte sichergestellt werden, dass der Höhenabstecker sich nicht versehentlich in der Höhe verstellen kann. Dies kann erreicht werden, indem die Absteckaufnahmen des Rungenkörpers von einer Stirnseite der Mittelrunge gesehen weiter im Inneren des Rungenkörpers vorgesehen sind als die Führung des Rungenkörpers. Mit anderen Worten wird das wenigstens eine Arretierungselement des Höhenabsteckers beim Verstellen des Höhenabsteckers von der Freigabestellung in die Arretierungsstellung weiter in den Rungenkörper hineingeschwenkt als die Ebene, in welcher der wenigstens eine Schwenkbolzen in der Führung des Rungenkörpers gehalten ist. Unter Last wird der Höhenabstecker mit dem Arretierungselement bei geeigneter ausgeformter Absteckaufnahme nur noch weiter in die Absteckaufnahme hineingedrückt und umso eher gehalten.

In einer konstruktiv besonders einfachen Ausgestaltung der Mittelrunge können die Absteckaufnahmen von einer Zahnleiste gebildet werden. Dies gilt insbesondere für den Fall, dass die Absteckaufnahmen Teil des Rungenkörpers sind. Alternativ oder zusätzlich kann es sich als zweckmäßig erweisen, wenn das wenigstens eine Arretierungselement des Höhenabsteckers als wenigstens ein Arretierungsbolzen ausgebildet ist. Ein Arretierungsbolzen kann zuverlässig in eine Absteckaufnahme eingeführt und sicher in der Absteckaufnahme gehalten werden.

Zur weiteren Vereinfachung der Höhenabsteckung der Mittelrunge kann es beitragen, wenn der Höhenabstecker lediglich ein Arretierungselement aufweist. Gleiches gilt alternativ oder zusätzlich auch für den Fall, dass der Höhenabstecker lediglich einen Schwenkbolzen aufweist. Der Höhenabstecker kann so insbesondere kompakter und leichter ausgebildet werden, was dem Handling des Höhenabsteckers dienlich sein kann.

Zur sicheren und zuverlässigen Führung des Höhenabsteckers entlang des Rungenkörpers kann die wenigstens eine Führung an gegenüberliegenden Seiten des Höhenabsteckers separate Führungselemente aufweisen. In diesen Führungselementen, die beispielsweise als Führungsschienen oder Führungsschlitze ausgebildet sein können, können dann separate Schwenkbolzen oder aber gegenüberliegende Enden eines einzigen Schwenkbolzens aufgenommen sein.

Einfach und zugleich besonders funktional kann es sein, wenn die wenigstens eine Führung, insbesondere die Führungselemente, in Form von wenigstens einer sich in Längsrichtung der Mittelrunge erstreckenden Aussparung ausgebildet ist. Der wenigstens eine Schwenkbolzen kann dann sicher formschlüssig gehalten und geführt werden.

Damit der Rungenschiebling zuverlässig und in definierter Weise in der Fahrstellung gehalten wird, kann das obere Ende des Höhenabsteckers eine Anschlagfläche zur Anlage am Rungenschiebling aufweisen. Wenn das Dach nach dem Verstellen des Höhenabsteckers von einer Höhenposition in eine andere Höhenposition abgesenkt wird, sitzt der Rungenschiebling in der gewünschten und vorbestimmten Weise und Position auf der Anschlagfläche des Höhenabsteckers auf.

Der einfachen Verstellung der Höhe des Dachs über einen weiten Bereich ist es bedarfsweise dienlich, wenn der Rungenschiebling in bestimmten Fahrstellungen des Dachs bestimmte Absteckaufnahmen des Rungenkörpers überdeckt. Dies bedeutet, dass der Rungenschiebling mit seinem unteren Ende, insbesondere mit seiner Anschlagfläche zur Anlage an dem Höhenabstecker unterhalb von einzelnen Absteckaufnahmen angeordnet ist. Dies lässt sich beispielsweise bewirken, wenn in einzelnen Höhenpositionen des Höhenabsteckers der am Höhenabstecker anliegende Rungenschiebling von der dem Höhenabstecker zugeordneten Stirnseite der Mittelrunge gesehen einzelne Absteckaufnahmen überdeckt.

Um den Höhenabstecker immer problemlos ergreifen und handhaben zu können, kann es zweckmäßig sein, die Führung des Rungenkörpers mit wenigstens einer Anschlagfläche auszustatten. Diese wenigstens eine Anschlagfläche kann dann zur Anlage an dem wenigstens einen Schwenkbolzen dienen, wenn der Höhenabstecker in der Führung ganz nach unten verstellt ist.

Nachfolgend wird die Erfindung anhand einer lediglich ein Ausführungsbeispiel darstellenden Zeichnung näher dargestellt. In der Zeichnung zeigt
- Fig. 1: ein Nutzfahrzeug mit einem erfindungsgemäßen Planenaufbau in einer perspektivischen Ansicht und
- Fig. 2A-F: Details einer erfindungsgemäßen Mittelrunge des Planenaufbaus aus Fig. 1 in einer schematischen, perspektivischen Ansicht in unterschiedlichen Stellungen während einer Verstellung der Fahrhöhe des Dachs.

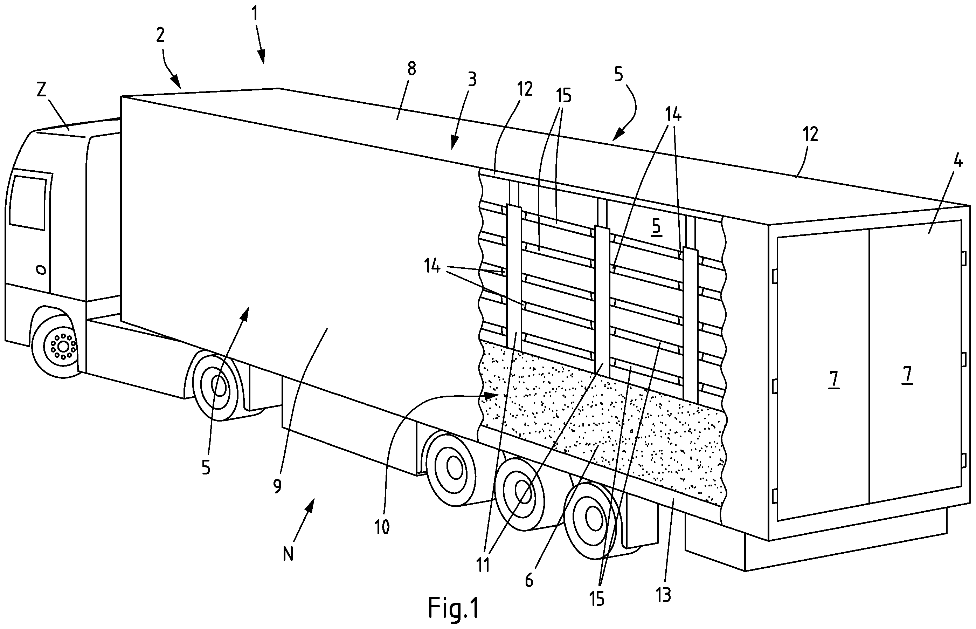

In der Fig. 1 ist ein von einer Zugmaschine Z gezogenes Nutzfahrzeug N in Form eines Sattelaufliegers mit einem Planenaufbau 1 dargestellt. Der Planenaufbau 1 weist eine Stirnwand 2, ein Dach 3, eine Rückwand 4, zwei Seitenwände 5 und einen Ladeboden 6 auf. Die Rückwand 4 wird durch Flügeltüren 7 verschlossen. Dagegen wird das Dach 3 durch eine Dachplane 8 verschlossen, während die Seitenwände 2 durch Seitenplanen 9 verschlossen sind. Die Seitenplanen 9 können nach Art eines sogenannten Curtainsiders im offenen Zustand zur Seite verschoben werden. In der Fig. 1 ist ein Teil der vorderen Seitenplane 9 weggelassen worden, so dass dort der Blick in den Laderaum 10 freigegeben ist. Auf der Innenseite der Seitenplanen 9 sind Mittelrungen 11 vorgesehen, die das Dach 3 des Planenaufbaus 1 gegenüber dem Ladeboden 6 abstützen. Dazu sind die Mittelrungen 11 einerseits mit einem Dachholm 12 und andererseits mit einem Bodenträger 13 des Ladebodens 6 verbunden. Dachholme 12 und Bodenträger 13 sind auf beiden Längsseiten des Dachs 3 und des Ladebodens 6 wenigstens im Wesentlichen übereinander angeordnet. Über die Höhe der Mittelrungen 11 verteilt sind Aufsatzlattenhalterungen 14 vorgesehen, in die Aufsatzlatten 15 eingeschoben sind. Die Aufsatzlatten 15 erstrecken sich dabei zwischen den Mittelrungen 11. Die endständigen Mittelrungen 11 sind über die Aufsatzlatten mit den nicht im Einzelnen dargestellten aber an sich bekannten Eckrungen an den Längsenden der Seitenwände 2 des Planenaufbaus 1 verbunden.

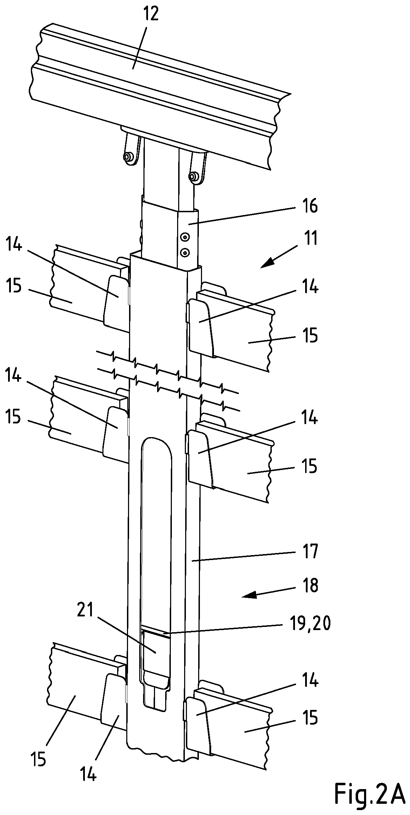

In den Fig. 2A-F ist eine Mittelrunge 11 während verschiedener Schritte einer Höhenverstellung des Dachs 3 dargestellt. Die Mittelrunge 11 umfasst einen Rungenschiebling 16, der fest an einem Dachholm 12 gehalten ist, und einen Rungenkörper 17, der fest mit dem Ladeboden 6 verbunden sein kann, um den Dachholm 11 gegen den Ladeboden 6 abzustützen. Der Rungenkörper 17 kann vom Ladeboden 6 gelöst werden. Dies erlaubt es, den weiter am Dachholm 11 gehaltenen Rungenschiebling 16 zusammen mit dem Rungenkörper 17 in Längsrichtung des Dachholms 11 zu verschieben, um Platz für das Be- und Entladen des Planenaufbaus 1 von der Seite zu machen. Zuvor können jedoch die Aufsatzlatten 15 aus den an den Schmalseiten des Rungenkörpers 17 vorgesehenen Aufsatzlattenhalterungen 14 entfernt werden, um ein Be- und Entladen des Planenaufbaus 1 nicht zu beeinträchtigen. Die Verbindung des Rungenkörpers 17 mit dem Ladeboden 6 ist in den Fig. 2A-F nicht im Einzelnen dargestellt. Es ist lediglich der obere Abschnitt der Mittelrunge 11 und ein mittlerer Abschnitt der Mittelrunge 11 im Bereich einer Höhenabsteckung 18 dargestellt.

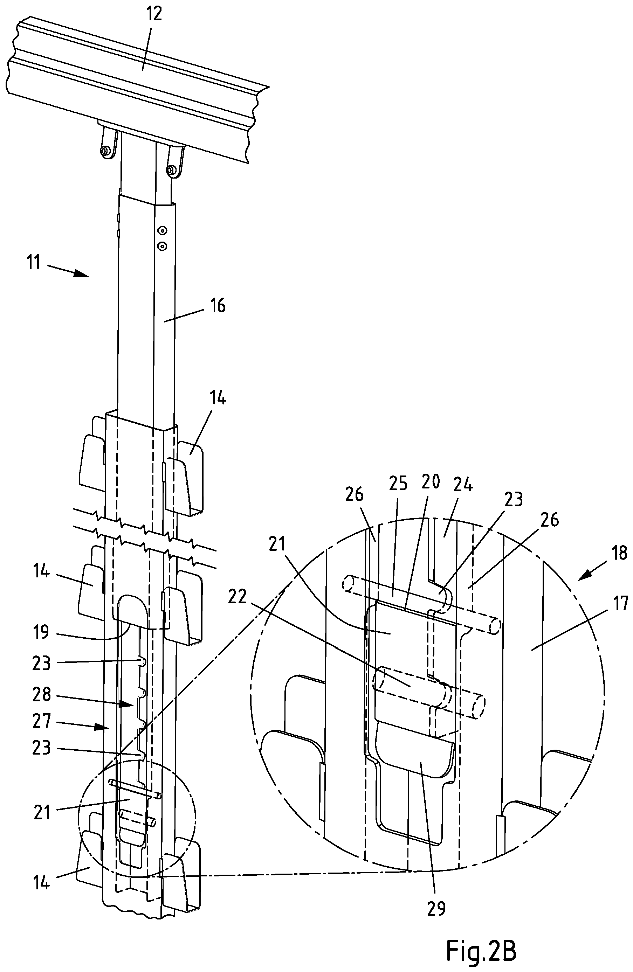

In der Fig. 2A ist die Mittelrunge 11 bei einer unteren Stellung des Dachs 3 dargestellt. Der Rungenschiebling 16 der Mittelrunge 11 ist relativ weit in den Rungenkörper 17 der Mittelrunge 11 eingeschoben und sitzt mit einer unteren Anschlagfläche 19 auf einer oberen Anschlagfläche 20 eines Höhenabsteckers 21 auf, welcher in einer unteren Stellung angeordnet ist. Nun wird mittels eines Hebemechanismus an den Eckrungen das Dach 3 angehoben. Die Mittelrunge 11 gelangt dabei in die in der Fig. 2B dargestellte Stellung, bei der der Rungenschiebling 16 deutlich weiter aus dem Rungenkörper 17 herausgezogen ist als in der Ausgangsstellung. Die untere Anschlagfläche 19 des Rungenschieblings 16 ist mithin deutlich höher angeordnet als die Anschlagfläche 20 des Höhenabsteckers 21, dessen Höhenposition sich nicht geändert hat. Der Rungenschiebling 16 wird mithin ausschließlich vom Dach 3 gehalten und stützt sich nicht auf dem Rungenkörper 17 oder dem Höhenabstecker 21 ab.

Der Höhenabstecker 21 befindet sich in einer Arretierungsstellung, in welcher ein Arretierungselement 22 in Form eines Arretierungsbolzens formschlüssig in eine Absteckaufnahme 23 eingreift. Die entsprechende Absteckaufnahme 23 ist eine von mehreren Absteckaufnahmen 23, die am Rungenkörper 17 übereinander vorgesehen sind. Dabei werden die Absteckaufnahmen 23 bei dem dargestellten und insoweit bevorzugten Ausführungsbeispiel von einer Zahnleiste 24 bereitgestellt. Das Arretierungselement 22 kann in unterschiedliche Absteckaufnahmen 23 eingeführt werden, etwa in die von dem Rungenschiebling 16 in der ursprünglichen unteren Stellung überdeckten und daher nicht zugänglichen Absteckaufnahmen 23. In der Arretierungsstellung des Höhenabsteckers 21 wird der Höhenabstecker 21 durch den Formschluss zwischen dem Arretierungselement 22 und der entsprechenden Absteckaufnahme 23 formschlüssig in einer Richtung nach unten am Rungenkörper 17 gehalten. Zudem weist der Höhenabstecker 21 bei dem dargestellten und insoweit bevorzugten Ausführungsbeispiel einen Schwenkbolzen 25 auf, der mit seinen beiden gegenüberliegenden Enden in Führungselementen 26 einer Führung 27 des Rungenkörpers 17 eingreift. In der Arretierungsstellung greift der Höhenabstecker 21 mit dem Arretierungselement 22 weiter durch die Öffnung 28 des Rungenkörpers 17 in den Rungenkörper 17 hinein als die durch die Führung 27 des Rungenkörpers 17 definierte Ebene.

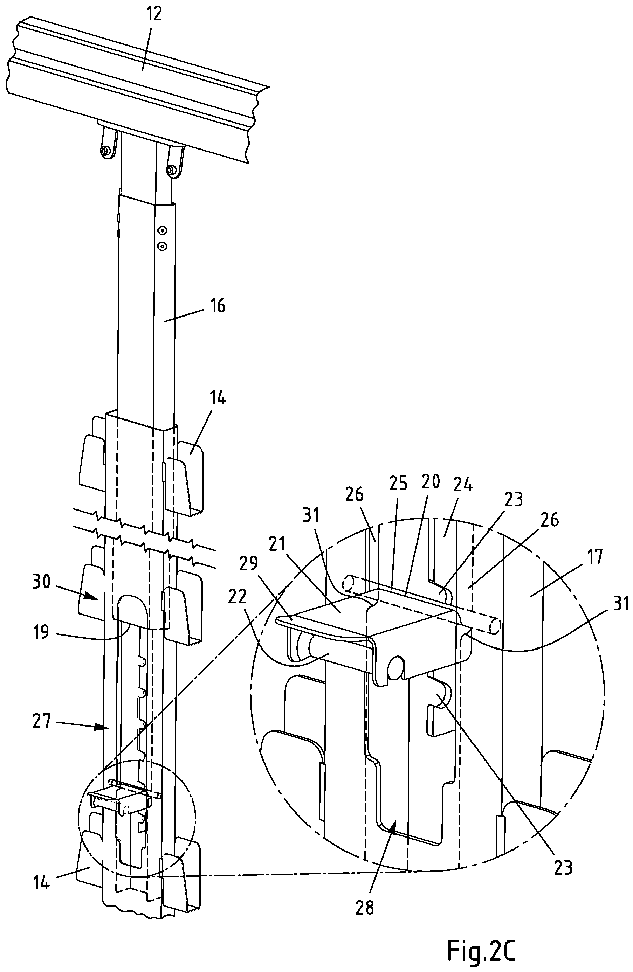

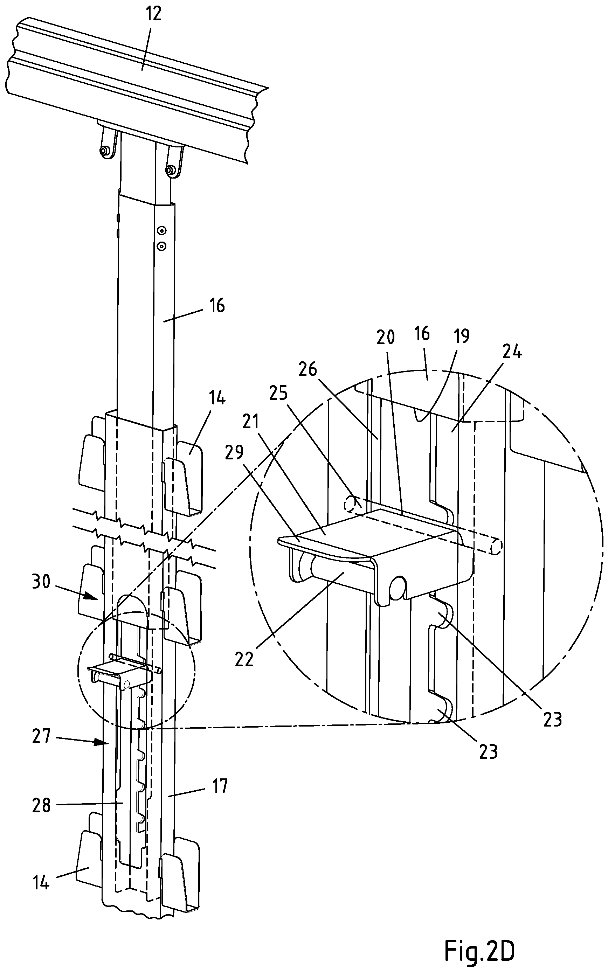

In einem weiteren Schritt ergreift der Bediener einen Griffabschnitt 29 des sich in der Arretierungsstellung befindenden Höhenabsteckers 21 und schwenkt diesen von der Arretierungsstellung um den in der Führung 27 aufgenommenen Schwenkbolzen 25 um etwa 90° in eine Freigabestellung nach außen, wie dies in der Fig. 2C dargestellt ist. Dabei gelangt das Arretierungselement 22 des Höhenabsteckers 21 außer Eingriff mit der Absteckaufnahme 23. Der Höhenabstecker 21 kann mithin in der Freigabestellung entlang der Führung 27 des Rungenkörpers 17 nach oben und wieder nach unten verschoben werden. Das Verschieben nach oben und unten wird jedoch durch obere Anschlagflächen 30 und untere Anschlagflächen 31 der Führung 27 begrenzt, die in Anlage an den Schwenkbolzen 25 gelangen, wenn der Höhenabstecker 21 ganz nach oben oder ganz nach unten verschoben worden ist. Während des Verschiebens des Höhenabsteckers 21 nach oben und nach unten entlang der Führung 27 bleibt der Schwenkbolzen 25 in der Führung 27 des Rungenkörpers 17 gehalten. Der Bediener schiebt den in der Freigabestellung angeordneten Höhenabstecker 21 nun nach oben auf eine gewünschte Höhenposition, wie dies in der Fig. 2D veranschaulicht ist. Dabei bleibt der Höhenabstecker 21 weiter von der Anschlagfläche 19 am unteren Rand des Rungenschieblings 16 beabstandet und in der Führung 27 des Rungenkörpers 17 gehalten. Der Höhenabstecker 21 bleibt während des Verschiebens entlang des Rungenkörpers 17 nach oben in der Freigabestellung.

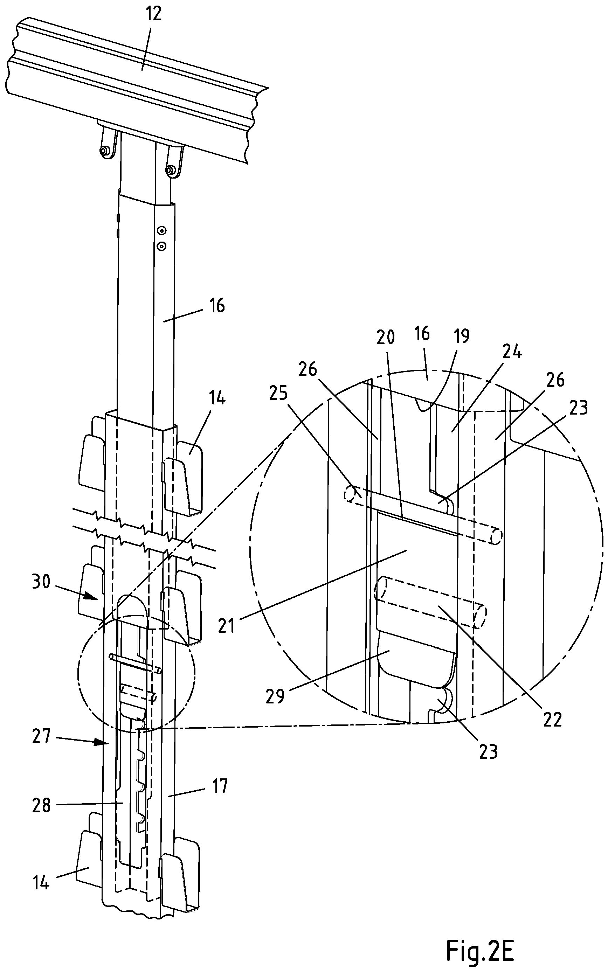

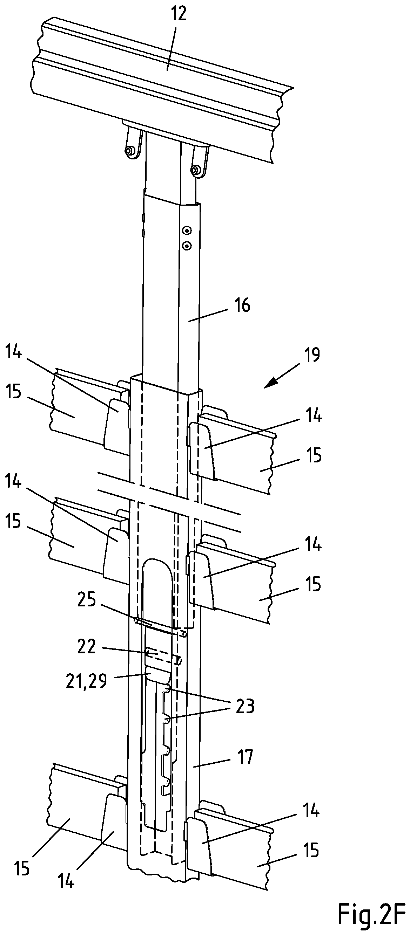

Aus dieser Freigabestellung wird der Höhenabstecker 21 vom Bediener auf der gewünschten Höhenposition des Höhenabsteckers 21 wieder um den Schwenkbolzen 25 in Richtung des Rungenkörpers 17 geschwenkt. Dabei gelangt der Höhenabstecker 21 mit dem Arretierungselement 22 in Eingriff mit einer auf entsprechender Höhe vorgesehenen Absteckaufnahme 23. Bei vollständig nach unten geschwenktem Höhenabstecker 21 nimmt dieser wieder eine Arretierungsstellung ein. Über das Arretierungselement 22 und die das Arretierungselement 22 formschlüssig aufnehmende Absteckaufnahme 23 wird ein Formschluss zwischen der Absteckaufnahme 23 und dem Höhenabstecker 21 nach unten bereitgestellt, wie dies in der Fig. 2E dargestellt ist. Nun kann das Dach 3 wieder über den Hebemechanismus an den Eckrungen abgesenkt werden, wobei der Rugenschiebling 16 wieder weiter in den Rungenkörper 17 eintaucht, bis die Anschlagfläche 19 am unteren Rand des Rungenschieblings 16 in Anlage an die Anschlagfläche 20 am oberen Rand des Höhenabsteckers 21 gelangt, wie dies in der Fig. 2F dargestellt ist. Nun sitzt das Dach 3 über den Rungenschiebling 16 auf dem Höhenabstecker 21 auf. Das Dach 3 kann nicht weiter nach unten gelangen. Das Dach 3 ist mithin in einer neuen Fahrhöhe eingestellt, welche oberhalb der ursprünglichen Fahrhöhe des Dachs 3 angeordnet ist. Sodann können die Aufsatzlatten 15 wieder in die Aufsatzlattenhalterungen 14 des Rungenkörpers 17 eingeschoben werden, sofern das Be- oder Entladen des Planenaufbaus 1 bereits erfolgt ist.

Die zuvor beschriebenen Schritte können wiederholt ausgeführt werden, um das Dach 3 in einer höheren oder niedrigeren Fahrhöhe einzustellen. Anhand der Darstellung der vorstehend beschriebenen Verfahrensschritte wird ersichtlich, dass der Höhenabstecker 21 sehr kompakt ausgebildet ist. Dabei ist der Abstand zwischen dem Arretierungselement 22 und dem Schwenkbolzen 25 des Höhenabsteckers 21 geringer ist als der Abstand zweier benachbarter Absteckaufnahmen 23 des Rungenkörpers 17. Die Länge des in einer Arretierungsstellung angeordneten Höhenabsteckers 21 in vertikaler Richtung ist ferner geringer als der Abstand zwischen drei aufeinanderfolgenden Absteckaufnahmen 23 der Zahnleiste 24. Bei der dargestellten und insoweit bevorzugten Mittelrunge 11 beträgt der mittlere Abstand von zwei aufeinanderfolgenden Absteckaufnahmen 23 etwa 50 mm, was eine sehr präzise Einstellung der Fahrhöhe des Dachs 3 erlaubt. Denkbar wären aber auch geringere Abstände von zwei aufeinanderfolgenden Absteckaufnahmen, beispielsweise in der Größenordnung von 25 mm.

## Patentansprüche

1. Mittelrunge (11) für einen Planenaufbau (1) eines Nutzfahrzeugs (N), insbesondere Lastkraftwagen, Anhänger oder Sattelauflieger, mit einem Rungenkörper (17), einem teilweise in dem Rungenkörper (17) aufgenommenen Rungenschiebling (16), einem ein weiteres Einschieben des Rungenschieblings (16) in den Rungenkörper (17) begrenzenden Höhenabstecker (21) und einer Mehrzahl von Absteckaufnahmen (23) zum Arretieren des Höhenabsteckers (21) in unterschiedlichen Höhenpositionen, wobei der Höhenabstecker (21) wenigstens ein Arretierungselement (22) zum formschlüssigen Eingreifen in die Absteckaufnahmen (23) in unterschiedlichen Höhenpositionen aufweist, **dadurch gekennzeichnet, dass** der Höhenabstecker (21) wenigstens einen in eine Führung (27) des Rungenkörpers (17) eingreifenden Schwenkbolzen (25) aufweist, dass der wenigstens eine Schwenkbolzen (25) zum Verstellen des Höhenabsteckers (21) zwischen den unterschiedlichen Höhenpositionen in der wenigstens einen Führung (27) geführt ist und dass der Höhenabstecker (21) von einer das Verstellen des Höhenabsteckers (21) zwischen unterschiedlichen Höhenpositionen freigebenden Freigabestellung in eine den Höhenabstecker (21) gegenüber einem Verstellen nach unten formschlüssig arretierenden Arretierungsstellung und zurück um den wenigstens einen Schwenkbolzen (25) schwenkbar in der Führung (27) des Rungenkörpers (17) gehalten ist.

2. Mittelrunge nach Anspruch 1,
**dadurch gekennzeichnet, dass** der Höhenabstecker (21) unverlierbar in der Führung (27) des Rungenkörpers (17) gehalten ist.

3. Mittelrunge nach Anspruch 1 oder 2,
**dadurch gekennzeichnet, dass** der Abstand zwischen dem wenigstens einen Arretierungselement (22) des Höhenabsteckers (21) und dem wenigstens einen Schwenkbolzen (25) geringer ist als der Abstand von acht, vorzugsweise von vier, insbesondere von zwei aufeinanderfolgenden Absteckaufnahmen (23).

4. Mittelrunge nach einem der Ansprüche 1 bis 3,
**dadurch gekennzeichnet, dass** die Höhenerstreckung des Höhenabsteckers (21) in der Arretierungsstellung kürzer ist als der Abstand von zehn, vorzugsweise von fünf, insbesondere von drei aufeinanderfolgenden Absteckaufnahmen (23).

5. Mittelrunge nach einem der Ansprüche 1 bis 4,
**dadurch gekennzeichnet, dass** der mittlere Abstand von zwei aufeinanderfolgenden Absteckaufnahmen (23) weniger als 100mm, vorzugsweise weniger als 80mm, insbesondere weniger als 60 mm, beträgt.

6. Mittelrunge nach einem der Ansprüche 1 bis 5,
**dadurch gekennzeichnet, dass** der Höhenabstecker (21) um wenigstens 50°, vorzugsweise wenigstens 70°, insbesondere um wenigstens 90° gegenüber dem Rungenkörper (17) auf und ab geschwenkt werden kann.

7. Mittelrunge nach einem der Ansprüche 1 bis 6,
**dadurch gekennzeichnet, dass** die Absteckaufnahmen (23) des Rungenkörpers (17) tiefer im Inneren des Rungenkörpers (17) vorgesehen sind als die Führung (27) des Rungenkörpers (17).

8. Mittelrunge nach einem der Ansprüche 1 bis 7,
**dadurch gekennzeichnet, dass** die Absteckaufnahmen (23) von einer Zahnleiste (24) gebildet werden und/oder dass das wenigstens eine Arretierungselement (22) als wenigstens ein Arretierungsbolzen ausgebildet ist.

9. Mittelrunge nach einem der Ansprüche 1 bis 8,
**dadurch gekennzeichnet, dass** der Höhenabstecker (21) lediglich ein Arretierungselement (22) aufweist und/oder dass der Höhenabstecker (21) lediglich einen Schwenkbolzen (25) aufweist.

10. Mittelrunge nach einem der Ansprüche 1 bis 9,
**dadurch gekennzeichnet, dass** die wenigstens eine Führung (27) an gegenüberliegenden Seiten des Höhenabsteckers (21) separate Führungselemente (26) aufweist.

11. Mittelrunge nach einem der Ansprüche 1 bis 10,
**dadurch gekennzeichnet, dass** die wenigstens eine Führung (27), insbesondere die Führungselemente (26), in Form von wenigstens einer sich in Längsrichtung der Mittelrunge (11) erstreckenden Aussparung ausgebildet ist.

12. Mittelrunge nach einem der Ansprüche 1 bis 11,
**dadurch gekennzeichnet, dass** das obere Ende des Höhenabsteckers (21) eine Anschlagfläche (20) zur Anlage am Rungenschiebling (16) aufweist.

13. Mittelrunge nach Anspruch 12,
**dadurch gekennzeichnet, dass** in einzelnen Höhenpositionen des Höhenabsteckers (21) der am Höhenabstecker (21) anliegende Rungenschiebling (16) von der dem Höhenabstecker (21) zugeordneten Seite der Mittelrunge (11) gesehen einzelne Absteckaufnahmen (23) überdeckt.

14. Mittelrunge nach einem der Ansprüche 1 bis 13,
**dadurch gekennzeichnet, dass** die Führung (27) des Rungenkörpers (17) wenigstens eine Anschlagfläche (31) zur Anlage an dem wenigstens einen Schwenkbolzen (25) des ganz nach unten verstellten Höhenabsteckers (21) bereitstellt.

15. Planenaufbau (1) für ein Nutzfahrzeug (N), insbesondere Lastkraftwagen, Anhänger oder Sattelauflieger, mit einem Dach (3), einem Ladeboden (6) und wenigstens einer Mittelrunge (11), wobei die wenigstens eine Mittelrunge (11) das Dach (3) am Ladeboden (6) abstützt,
**dadurch gekennzeichnet, dass** die wenigstens eine Mittelrunge (11) nach einem der Ansprüche 1 bis 14 ausgebildet ist.
